# DEMANDE DE BREVET EUROPEEN

(11) **EP 2 886 972 A1**
(43) Date de publication de la demande: **24.06.2015**
(21) Numéro de dépôt: 14198345.2
(22) Date de dépôt: 16.12.2014
(51) Int. Cl.: F24J 2/38, F24J 2/54

(54) **Dispositif de positionnement d'une paroi solaire et système de captation de l'énergie solaire comprenant un tel dispositif**

(30) Priorité: 20.12.2013 FR 1363352
(71) Demandeur: Amaterrasu, 34500 Béziers (FR)
(72) Inventeur: Koszul, Olivier, 34300 Agde (FR); Druon, Sébastien, 34725 Jonquieres (FR)
(74) Mandataire: Pontet Allano & Associes

(57) **Abrégé**

L'invention concerne un dispositif (100) de positionnement d'un panneau (102) de réception d'un rayonnement solaire, dit panneau solaire, comprenant :
- au moins un moyen moteur (104, 106) pour déplacer ledit panneau solaire (102) suivant au moins un degré de liberté,
- au moins un moyen (108) de commande pour commander ledit moyen moteur (104, 106), en fonction d'une position réelle et d'une position théorique ;
- au moins un moyen (110, 112), dit de positionnement, pour fournir ladite position réelle dudit panneau solaire (102) ;
caractérisé en ce que le moyen de positionnement comprend un capteur (110) coopérant de manière sans fil avec au moins une cible (112) pour fournir ladite position réelle.

Elle concerne également un module de captation du rayonnement solaire et un système de production d'électricité.

## Description

L'invention concerne un dispositif de positionnement d'une paroi de réception du rayonnement solaire. Elle concerne également un système de captation de l'énergie solaire mettant en oeuvre un tel dispositif.

Le domaine de l'invention est le domaine des systèmes de captation de l'énergie solaire par un panneau solaire, tel qu'un panneau photovoltaïque produisant de l'électricité ou un panneau solaire utilisé pour chauffer un flux caloporteur. Plus précisément, le domaine de l'invention est le domaine des dispositifs de positionnement ou d'orientation des panneaux solaires en fonction de la position du soleil.

### Etat de la technique

De nos jours, les énergies renouvelables constituent un domaine en vogue concentrant des efforts de développement importants.

Parmi les énergies renouvelables, l'énergie solaire tient une place importante. Les systèmes de captation du rayonnement solaire, en vue par exemple de produire de l'électricité, constituent un axe de développement important.

L'élément au coeur des systèmes de captation est un panneau solaire prévu pour recevoir le rayonnement solaire. L'efficacité du système de captation dépend fortement du positionnement du panneau solaire par rapport à la position du soleil en vue de capter le plus de rayonnement solaire.

Actuellement, il existe des systèmes dans lesquels le panneau solaire est fixe dans une position permettant de capter le maximum de rayonnement solaire dans une période donnée dans la journée uniquement.

Dans d'autres systèmes, le panneau solaire présente un rayon de courbure, généralement dans le plan perpendiculaire (c'est-à-dire autour d'un axe horizontal) permettant de capter le rayonnement solaire pour plusieurs inclinaisons du soleil par rapport à l'horizon.

Certains systèmes comprennent un moyen moteur pour ajuster la position du panneau solaire suivant un degré de liberté uniquement, le plus souvent autour d'un axe de rotation perpendiculaire au sol permettant de positionner le panneau en fonction de la position du soleil à différents instants de la journée.

Ces systèmes mettent en oeuvre un moyen de positionnement mécanique comprenant un ou des codeurs pour d'une part connaitre la position réelle du panneau en vue d'ajuster cette position réelle avec le plus de précision possible.

Le moyen de positionnement est soit intégré au moyen moteur soit disposé entre le moyen moteur et un châssis portant le panneau solaire. De ce fait, son installation et sa maintenance sont consommateurs en temps et couteux. De plus, compte-tenu de la précision de positionnement exigée pour obtenir un rendement satisfaisant, un tel moyen de positionnement mécanique devient très vite complexe, couteux, encombrant et alourdit l'ensemble obtenu. En outre, plus les dimensions et le poids du panneau solaire augmentent, plus le poids et la complexité du moyen de positionnement augmentent.

L'invention a pour but de pallier les inconvénients précités.

Notamment, le but de l'invention est de proposer un dispositif de positionnement d'un panneau solaire plus simple, moins couteux, moins encombrant et nécessitant moins d'entretien.

Un autre but de l'invention est de proposer, un dispositif de positionnement d'un panneau solaire dont les dimensions et la complexité sont indépendantes des dimensions et du poids du panneau solaire.

Enfin, un autre but de l'invention est de proposer un dispositif de positionnement d'un panneau solaire présentant plus de flexibilité lors de son utilisation et lors de son installation.

### Exposé de l'invention

L'invention permet d'atteindre au moins l'un des buts précités par un dispositif de positionnement d'un panneau de réception d'un rayonnement solaire, dit panneau solaire, comprenant :
- au moins un moyen moteur pour déplacer ledit panneau solaire suivant au moins un degré de liberté,
- au moins un moyen de commande pour commander ledit au moins un moyen moteur, en fonction d'une position réelle et d'au moins une position théorique prédéfinie dudit panneau solaire ;
- au moins un moyen, dit de positionnement, pour fournir au moins une donnée relative à ladite position réelle de ladite paroi solaire ;
caractérisé en ce que le moyen de positionnement comprend au moins un capteur coopérant de manière sans fil avec au moins une cible pour fournir ladite au moins une donnée relative à ladite position réelle de ladite paroi solaire.

Le dispositif selon l'invention permet donc de déterminer et de suivre la position réelle du panneau solaire grâce à au moins un capteur coopérant de manière sans fil avec au moins une cible. Ainsi, il est possible de déporter la cible ou le capteur hors du panneau, du moyen moteur et/ou d'un châssis supportant le panneau.

Un tel moyen de positionnement permet une architecture plus simple du moyen de positionnement, et par conséquent du dispositif de positionnement. De plus, l'installation et l'utilisation du moyen de positionnement sont plus flexibles, ce qui laisse plus de liberté sur la conception du dispositif de positionnement.

Par ailleurs, l'utilisation d'un capteur coopérant avec une cible de manière sans fil évite d'installer le moyen de positionnement entre le moyen moteur et le panneau solaire (ou un châssis supportant le panneau solaire). L'installation et la maintenance du moyen de positionnement sont alors facilitées. En outre, les dimensions du moyen de positionnement ne dépendent alors pas ou peu des dimensions et du poids du panneau solaire, ce qui permet d'utiliser des capteurs et des cibles moins couteux et moins encombrants.

Selon une première version du dispositif selon l'invention, au moins un, en particulier chaque, capteur peut être disposé solidaire du panneau solaire, par exemple sur le panneau solaire, et au moins une cible est disposée fixe dans un référentiel comprenant le panneau solaire, par exemple sur la surface sur laquelle le panneau solaire est disposé. Dans ce cas, lorsque le panneau solaire est bougé par le moyen moteur, le capteur bouge également avec le panneau solaire.

Selon une deuxième version du dispositif selon l'invention, au moins une, en particulier chaque, cible peut être disposée solidaire du panneau solaire, par exemple sur le panneau solaire, et au moins un capteur est disposé fixe dans un référentiel comprenant le panneau solaire.

Dans ce cas, la ou les cibles peuvent être disposées sur une surface du panneau, par exemple la face arrière du panneau solaire par rapport à la face recevant le rayonnement solaire. Le capteur, quant à lui, peut être déporté par rapport au panneau.

Cette version du dispositif selon l'invention permet d'une part de ne pas avoir à bouger le capteur lorsque le panneau est bougé par le moyen moteur. De plus, la position du capteur peut être adaptée en fonction des dimensions du panneau.

Cette deuxième version est la version préférée du dispositif selon l'invention.

Selon l'invention, au moins un capteur peut comprendre au moins :
- une caméra opérant dans le visible et/ou l'infrarouge, ou plus généralement sur une partie donnée du spectre d'un rayonnement donné ;
- une cellule infrarouge, ou plus généralement une cellule fonctionnant sur une partie donnée du spectre d'un rayonnement donné ;
- un capteur de champ magnétique, tel qu'un capteur à effet Hall et/ou
- un capteur capacitif, tel qu'une électrode capacitive.

Dans une version préférée, le ou chaque capteur est une caméra opérant dans le visible et l'infrarouge. Une telle caméra présente plusieurs avantages. Premièrement, une telle caméra peut surveiller/visualiser plusieurs cibles dans le visible et/ou l'infrarouge, ce qui permet d'utiliser plusieurs cibles et donc d'améliorer la précision de détection. Deuxièmement, une seule caméra peut être utilisée pour plusieurs dispositifs de positionnement selon l'invention. Troisièmement, en plus des fonctions de détection et de surveillance de la position du panneau solaire, la caméra peut être utilisée pour d'autres fonctions telles que la surveillance du panneau solaire et de son environnement pour :
- éviter/détecter des actes de malveillance,
- déterminer les besoins en maintenance d'un panneau solaire ou d'un composant environnant,
- vérifier le bon fonctionnement d'un panneau solaire, etc.

Selon l'invention, au moins, voire chaque cible peut être une cible active ou une cible passive.

En particulier, au moins une cible peut comprendre :
- un point ou une zone d'intérêt, faisant partie du panneau solaire ou d'un châssis portant le panneau solaire lorsque la ou les cibles sont solidaires du panneau,
- un moyen optique, tel qu'un point ou une zone d'une couleur donnée,
- un moyen magnétique, tel qu'un aimant par exemple,
- un moyen capacitif, telle qu'une électrode capacitive.

Selon un exemple de réalisation préféré du dispositif selon l'invention, le capteur comprend une caméra, fixe dans un référentiel comprenant le panneau solaire, disposée en regard d'une face arrière du panneau solaire, et coopérant avec plusieurs cibles optiques définies/disposées sur la face arrière dudit panneau solaire. La caméra est donc distante du panneau solaire et disposée du côté de la face arrière du panneau solaire.

Avantageusement, le dispositif selon l'invention peut comprendre un premier moyen moteur pour déplacer le panneau solaire autour d'un axe de rotation horizontal et un deuxième moyen moteur pour déplacer le panneau solaire autour d'un axe de rotation vertical.

Le premier moyen moteur peut être disposé de sorte que, lorsque le deuxième moyen moteur déplace le panneau, il déplace également le premier moyen moteur.

Le ou les moyens moteurs peuvent être agencés pour positionner le panneau solaire selon un angle compris entre 0 à 125° par rapport à chacun des axes de rotation, en participer, par rapport à l'axe vertical.

Le fait de pouvoir positionner le panneau solaire à un angle compris entre 90 et 125° par rapport à l'axe horizontal permet de capter du rayonnement solaire même dans les régions équatoriales dans lesquelles le soleil peut se trouver d'un côté ou de l'autre de cet axe horizontal dans une même journée ou année.

Le dispositif selon l'invention peut avantageusement comprendre un moyen mémoire pour mémoriser une pluralité de positions théoriques du panneau solaire, chacune associée à un instant donné dans une journée et/ou un mois et/ou une année.

Le moyen mémoire peut être intégré directement dans le moyen de commande ou externe au moyen de commande.

Alternativement, les positions théoriques peuvent être calculées en fonction d'un temps astronomique, de la position dans un référentiel donné du panneau solaire, par exemple le référentiel terrestre, d'une orientation de référence du panneau solaire et d'un algorithme de calcul d'éphéméride.

Le moyen de commande peut être un processeur recevant des signaux de la part des capteurs, et éventuellement de la part du moyen mémoire, pour calculer la position réelle du panneau solaire et envoyer des signaux de commande au(x) moyen(s) moteur.

Le dispositif de positionnement peut en outre comprendre des moyens de réception de signaux depuis un site distant au travers d'un réseau de communication filaire ou sans fil.

Le moyen de commande peut en outre être configuré pour disposer le panneau de commande dans une configuration, dite de sécurité, permettant de protéger le panneau solaire en cas de conditions météorologiques agressives, telles que par exemple en cas de vents forts. La configuration de sécurité peut correspondre à une position théorique préprogrammée dans le moyen de commande ou dans le moyen mémoire.

Selon un autre aspect de l'invention, il est proposé un module de captation du rayonnement solaire comprenant :
- un panneau solaire, et
- un dispositif de positionnement dudit panneau solaire selon l'invention.

Le panneau solaire peut être de n'importe quelle forme.

Selon une version préférée, le plan solaire est sensiblement plan.

Selon l'invention, le panneau solaire peut comprendre :
- au moins un panneau photovoltaïque transformant le rayonnement solaire reçu par le panneau en énergie électrique, ou
- une surface réfléchissante pour réfléchir le rayonnement solaire reçu par ledit panneau sur un flux de liquide caloporteur en vue de chauffer ledit flux caloporteur, ou
- un circuit de flux caloporteur intégré dans ledit panneau et chauffé par le rayonnement solaire reçu par ledit panneau.

Selon encore un autre aspect de l'invention, il est proposé un système de production d'énergie électrique à partir du rayonnement solaire comprenant :
- au moins un module de captation du rayonnement solaire, selon l'invention pour chauffer un flux caloporteur, et
- au moins moyen de production d'énergie électrique, tel q'une trubine ou un moteur à vapeur, entrainé par l'énergie thermique captée par ledit flux caloporteur.

Le système selon l'invention peut comprendre un circuit permettant d'acheminer le flux caloporteur entre la turbine et chaque module de captation du rayonnement solaire.

Selon encore un autre aspect de l'invention, il est proposé un système de production d'eau chaude ou d'air chaud mettant en oeuvre au moins un module de captation du rayonnement solaire selon l'invention, pour chauffer un flux caloporteur qui comprend alors, respectivement, de l'eau ou de l'air.

D'autres avantages et caractéristiques apparaîtront à l'examen de la description détaillée d'exemples nullement limitatifs, et des dessins annexés sur lesquels :
- la FIGURE 1 est une représentation schématique d'un dispositif de positionnement selon l'invention ;
- la FIGURE 2 est une représentation schématique d'un exemple d'un module de captation du rayonnement solaire selon l'invention selon une vue de derrière ;
- la FIGURE 3 est une représentation schématique d'un module de la FIGURE 2 selon une vue de devant ;
- la FIGURE 4 est une représentation schématique d'un deuxième exemple d'un module de captation du rayonnement solaire selon l'invention ; et
- la FIGURE 5 est une représentation schématique d'un exemple de système de production d'électricité selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détail structurel, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

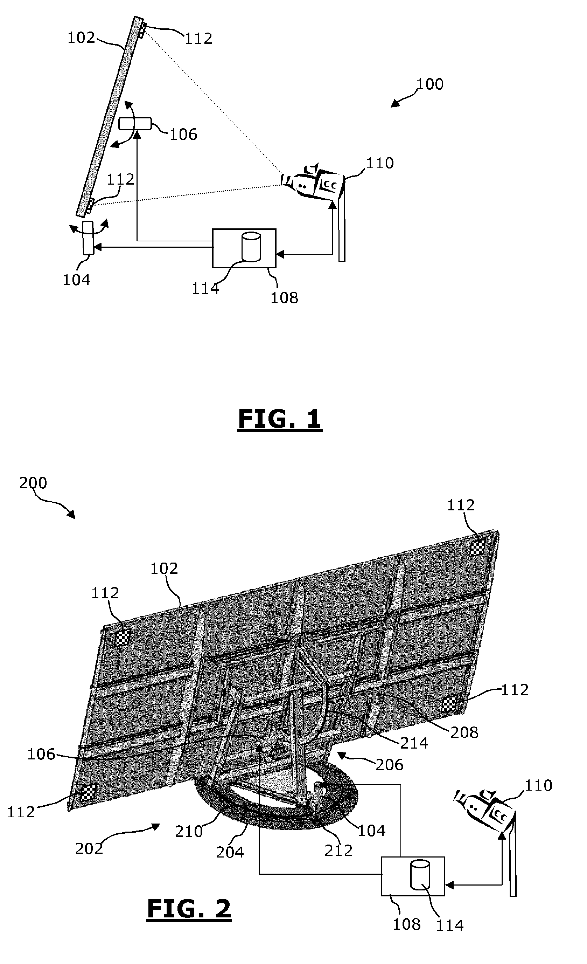

La FIGURE 1 est une représentation schématique d'un dispositif de positionnement selon l'invention.

Le dispositif de positionnement 100 représenté sur la FIGURE 1 permet de positionner un panneau solaire 102.

Le dispositif de positionnement 100 comprend un premier moteur 104 pour faire pivoter un panneau solaire autour d'un axe vertical et un deuxième moteur 106 pour faire pivoter un panneau solaire autour d'un axe horizontal. Ainsi, le panneau solaire peut être déplacé en une multitude de points se trouvant sur une demi-sphère.

Les moteurs 104 et 106 sont commandés par un module de commande 108, qui est préférentiellement un processeur, émettant des signaux de commande à chacun des moteurs 104 et 106 pour d'une part les mettre en marche ou les arrêter et d'autre part leur indiquer le sens de rotation à effectuer.

Le dispositif 100 comprend en outre des moyens de positionnement permettant de déterminer la position réelle du panneau solaire à tout moment et transmettre cette position réelle au module de commande 108. Les moyens de positionnement comprennent une caméra 110 fonctionnant dans le visible et l'infrarouge qui surveille de manière sans fil et à distance quatre cibles optiques ou visuelles 112 disposées sur la surface arrière du panneau solaire, par exemple au niveau des quatre coins du panneau solaire 102. Chaque cible 112 est, dans le présent exemple, une surface, ou une étiquette, d'une couleur vive différente de la couleur du panneau solaire de sorte à être discriminée par la caméra.

Par conséquent, les cibles 112 sont solidaires du panneau solaire 102 et la caméra 110 est déportée du panneau solaire 102 du côté arrière du panneau solaire 102 et fixe dans le référentiel comprenant le panneau solaire 102. La mesure, par la caméra 110, de la distance de chacune des cibles 112 permet de déterminer précisément la position du panneau solaire 102, et plus précisément son orientation dans le plan horizontal et son orientation dans le plan vertical.

Le module de commande 108 comprend un moyen de mémorisation 114 dans lequel sont mémorisées des positions théoriques préférées du panneau solaire 102 pour différents instants de la journée, d'un mois et d'une année, en vue de capter le maximum de rayonnement solaire au niveau de la surface de réception du panneau solaire 102. Chaque position théorique correspond à un angle dans le plan horizontal et un angle dans le plan vertical.

Alternativement, les positions théoriques peuvent être calculées en fonction d'un temps astronomique, de la position dans un référentiel donné du panneau solaire, par exemple le référentiel terrestre, d'une orientation de référence du panneau solaire et d'un algorithme de calcul d'éphéméride.

Le positionnement du panneau solaire 102 est réalisé de la manière suivante pour un instant donné d'une journée. La caméra 110 prend une ou des images de la face arrière du panneau solaire 102 comprenant les cibles 112, par exemple sur commande du module de commande 108, et les transmet au module de commande 108. Cette ou ces images sont traitées par le module de commande 108 pour déterminer les distances/angles de chacune des cibles 112 et en déduire la position réelle du panneau solaire 102 pour cet instant, à savoir l'inclinaison du panneau solaire 102 dans chacun des plans horizontal et vertical. Parallèlement, ou ensuite, le module de commande 108 sélectionne la position théorique préalablement mémorisée dans la mémoire 114 pour cet instant de la journée par lecture dans la mémoire 114. Le module de commande 108 compare la position réelle du panneau solaire 102 à la position théorique et détermine la course nécessaire sur chaque moteur 104 et 106 pour atteindre la position théorique à partir de la position réelle. Ensuite, le module de commande 108 commande, en même temps ou à tour de rôle, chacun des moteurs 104 et 106 qui appliquent la ou les rotations nécessaires pour positionner le panneau solaire à la position théorique à partir de la position réelle.

Ces opérations peuvent être itérées autant de fois que nécessaire jusqu'à ce que la position réelle du panneau solaire 102 soit identique à la position théorique.

La FIGURE 2 est une représentation schématique d'un module de captation du rayonnement solaire selon l'invention selon une vue de derrière.

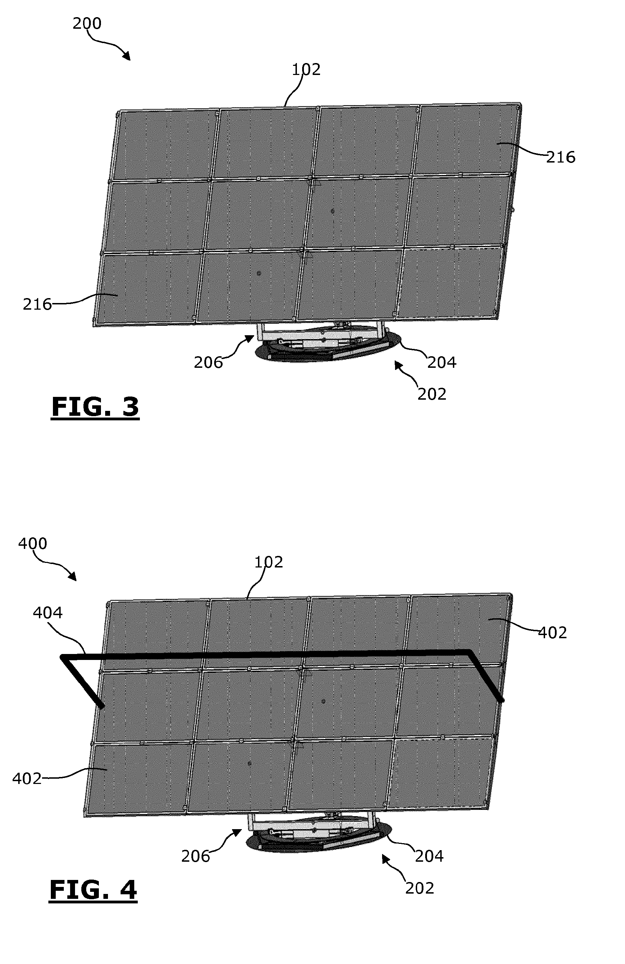

La FIGURE 3 est une représentation schématique du module de la FIGURE 2 selon une vue de devant.

Le module de captation 200 de rayonnement solaire comprend le dispositif de positionnement 100 représenté sur la FIGURE 1.

Le module de captation 200 comprend en outre un châssis 202 supportant le panneau solaire 102 et les moteurs 104 et 106.

Le châssis comprend une embase 204 prévue pour être posée au sol ou sur une surface d'accueil du module de captation 200, un corps 206 disposé rotatif sur l'embase 204 autour d'un axe vertical, et un support 208 du panneau solaire 102 disposé rotatif sur le corps 206 au tour d'un axe horizontal.

L'embase 204 est pourvue d'une roue dentée immobile 210, fixée solidaire à l'embase 204. Le premier moteur 104, prévu pour réaliser la rotation du panneau solaire 102 autour d'un axe vertical, est fixé solidaire au corps 206 du châssis 202. Ce premier moteur 104, comporte un axe rotatif muni en son extrémité d'une petite roue dentée 212 qui est engagée dans la roue dentée immobile 210. La rotation de l'axe du moteur 104 fait tourner la petite roue dentée 212 contre la roue dentée immobile 210. La roue dentée immobile 210 étant fixe par rapport à l'embase, la rotation de la petite roue dentée 212 fait tourner le corps 206 du châssis, et donc le panneau solaire 102, autour d'un axe de rotation perpendiculaire.

Le support 208 compote un bras denté 214, formant sensiblement un quart d'un arc de cercle, fixé solidaire et immobile au support 208. Le deuxième moteur 106, prévu pour réaliser la rotation du panneau solaire 102 autour d'un axe horizontal, est fixé solidaire au corps 206 du châssis 202. Ce deuxième moteur 106, comporte également un axe rotatif muni en son extrémité d'une petite roue dentée (non représentée) qui est engagée dans le bras denté 214 en forme d'arc de cercle. La rotation de l'axe du moteur 106 fait tourner la petite roue dentée contre le bras denté 214. Le moteur 106 étant fixé immobile au corps 206 du châssis 202, la rotation de la petite roue dentée du moteur 106 entraine le déplacement du bras denté 214 en forme d'arc de cercle, et par conséquent la rotation du support 208 auquel le bras denté 214 en forme d'arc de cercle est fixé solidaire.

Le panneau solaire 102 est un plan sensiblement plan comprenant une pluralité de panneaux individuels 216 qui peuvent être des panneaux photovoltaïques, des panneaux parcourus par un fluide à chauffer.

La FIGURE 4 est une représentation schématique d'un deuxième exemple d'un module de captation du rayonnement solaire selon l'invention selon une vue de derrière.

Le module 400 représenté sur la FIGURE 4 comprend tous les éléments du module 200 représenté sur les FIGURES 2 et 3, à ceci près que le panneau solaire 102 est formé par une pluralité de panneaux réfléchissants 402 utilisés pour réfléchir le rayonnement solaire incident vers un flux caloporteur circulant dans un circuit 404 disposé en regard de ces panneaux réfléchissants 402.

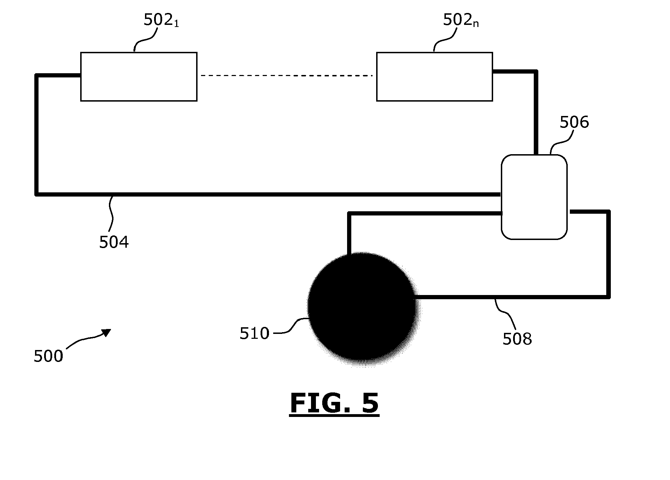

La FIGURE 5 est une représentation schématique d'un système de production d'électricité selon l'invention.

Le système 500 représenté sur la FIGURE 5 comprend une pluralité de modules 502₁-502ₙ de captation du rayonnement solaire pour chauffer un flux caloporteur, tel que le module 200 représenté sur la FIGURE 3 ou le module 400 représenté sur la FIGURE 4.

Ces modules 502₁-502ₙ permettent de chauffer un premier flux caloporteur circulant dans un premier circuit 504. Un échangeur thermique 506 permet de réaliser un échange thermique entre le flux caloporteur circulant dans le premier circuit 504 pour chauffer un deuxième flux caloporteur, tel que de l'eau, circulant dans un deuxième circuit 508.

Le deuxième flux caloporteur circulant dans le deuxième circuit 508 entraine une turbine 510 de production d'électricité.

Chacun des circuits 504 et 508 peuvent comprendre des moyens (non représentés) pour faire circuler les flux et des moyens (non représentés) pour modifier la pression de flux.

Bien entendu l'invention n'est pas limitée aux exemples qui viennent d'être décrits.

Par exemple, la caméra et les cibles optiques peuvent être remplacés par d'autres moyens de mesure sans fil tels que décrits plus haut.

De plus, la caméra peut être disposée sur le panneau solaire et les cibles à distance du panneau solaire.

Le panneau solaire peut ne pas être plan, mais incurvé.

## Revendications

1. Dispositif (100) de positionnement d'un panneau (102) de réception d'un rayonnement solaire, dit panneau solaire, comprenant :
- au moins un moyen moteur (104, 106) pour déplacer ledit panneau solaire (102) suivant au moins un degré de liberté ;
- au moins un moyen (108) de commande pour commander ledit au moins un moyen moteur (104, 106), en fonction d'une position réelle et d'au moins une position théorique prédéfinie dudit panneau solaire (102) ;
- au moins un moyen (110, 112), dit de positionnement, pour fournir au moins une donnée relative à ladite position réelle dudit panneau solaire (102), ledit moyen de position comprenant au moins un capteur (110) coopérant de manière sans fil avec au moins une cible (112) pour fournir ladite au moins une donnée relative à ladite position réelle dudit panneau solaire (102) ;
**caractérisé en ce que** :
- lorsque l'au moins un capteur est disposé solidaire dudit panneau, l'au moins une cible est disposée fixe dans un référentiel comprenant ledit panneau solaire, et
- lorsque l'au moins une cible est disposée solidaire dudit panneau, l'au moins un capteur est disposé fixe dans un référentiel comprenant ledit panneau solaire.

2. Dispositif selon la revendication 1, **caractérisé en ce qu'**au moins un capteur est disposé solidaire du panneau solaire et au moins une cible est disposée fixe dans un référentiel comprenant le panneau solaire.

3. Dispositif (100) selon l'une quelconque des revendications précédentes, **caractérisé en ce qu'**au moins une cible (112) est disposée solidaire du panneau solaire (102) et au moins un capteur (110) est disposé fixe dans un référentiel comprenant le panneau solaire (102).

4. Dispositif (100) selon l'une quelconque des revendications précédentes, **caractérisé en ce qu'**au moins un capteur comprend :
- une caméra (110) opérant dans le visible et/ou l'infrarouge,
- une cellule infrarouge,
- un capteur de champ magnétique, et/ou
- un capteur capacitif.

5. Dispositif (100) selon l'une quelconque des revendications précédentes, **caractérisé en ce qu'**au moins une cible comprend :
- un point ou une zone d'intérêt,
- un moyen optique (112),
- un moyen magnétique, et/ou
- un moyen capacitif.

6. Dispositif (100) selon l'une quelconque des revendications 3 à 5, **caractérisé en ce que** le capteur comprend une caméra (110), fixe dans un référentiel comprenant le panneau solaire (102), disposée en regard d'une face arrière du panneau solaire (102), et coopérant avec des cibles optiques (112) définies/disposées sur ladite face arrière dudit panneau solaire (102).

7. Dispositif selon l'une quelconque des revendications précédentes, **caractérisé en ce qu'**il comprend un premier moyen moteur (106) pour déplacer le panneau solaire (102) autour d'un axe de rotation horizontal et un deuxième moyen moteur (104) pour déplacer le panneau solaire (102) autour d'un axe de rotation vertical.

8. Dispositif (100) selon l'une quelconque des revendications précédentes, **caractérisé en ce qu'**il comprend en outre un moyen mémoire (114) pour mémoriser une pluralité de positions théoriques du panneau solaire (102), chacune associée à un instant donné dans une journée et/ou un mois et/ou une année.

9. Module de captation (200 ; 400 ; 502) du rayonnement solaire comprenant :
- un panneau solaire (102), et
- un dispositif (100) de positionnement dudit panneau solaire (102) selon l'une quelconque des revendications précédentes.

10. Module (200 ; 400 ; 502) de captation selon la revendication précédente, **caractérisé en ce que** le panneau solaire (102) est sensiblement plan.

11. Module (200 ; 400 ; 502) selon l'une quelconque des revendications 9 ou 10, **caractérisé en ce que** le panneau solaire (102) comprend :
- au moins un panneau photovoltaïque transformant le rayonnement solaire reçu par ledit panneau (102) en énergie électrique,
- une surface réfléchissante pour réfléchir le rayonnement solaire reçu par ledit panneau (102) sur un flux de liquide caloporteur en vue de chauffer ledit flux caloporteur, ou
- un circuit de flux caloporteur intégré dans ledit panneau (102) et chauffé par le rayonnement solaire reçu par ledit panneau (102).

12. Système (500) de production d'énergie électrique à partir du rayonnement solaire comprenant :
- au moins un module (200 ; 400 ; 502) selon l'une quelconque des revendications 9 à 11 pour chauffer un flux caloporteur, et
- au moins un moyen de production d'énergie électrique (510) entrainé par l'énergie thermique captée par ledit flux caloporteur.
